# EUROPEAN PATENT APPLICATION

(11) **EP 1 058 419 A2**
(43) Date of publication of application: **06.12.2000**
(21) Application number: 00401487.4
(22) Date of filing: 26.05.2000
(51) Int. Cl.: H04L 12/24, G06F 13/12, H04L 12/28, H04N 1/333, H04L 1/00

(54) **Updating of processing peripherals on a communication network**

(30) Priority: 31.05.1999 FR 9906850; 31.05.1999 FR 9906851; 31.05.1999 FR 9906852
(71) Applicant: Canon Europa N.V., 1185 EG Amstelveen (NL)
(72) Inventor: Moreau, Jean-Jacques, 35000 Rennes (FR); Delumeau, Francois, 35000 Rennes (FR); Visa, Pierre, 35000 Rennes (FR); Goulache, Stéphane, 35700 Rennes (FR)
(74) Representative: Rinuy, Santarelli

(57) **Abstract**

A method of updating the configuration characteristics of at least one processing peripheral accessible from a processing control device via a communication network, comprises the following steps:
- evaluating (E30) the bandwidth available on the communication network;
- choosing (E33) a configuration mode of said processing peripheral depending on said available bandwidth; and
- updating (E36), if necessary, the configuration of said processing peripheral from the configuration mode chosen.

## Description

The present invention concerns the updating of processing peripherals and the processing of a document by one or these processing peripherals on a communication network.

The present invention concerns, in a first aspect, a method of updating the configuration characteristics of at least one processing peripheral accessible from a processing control device via a communication network.

It concerns correlatively a device adapted to implement the updating method according to this first aspect of the invention.

The present invention concerns in a second aspect a method of updating a list of processing peripherals accessible from a processing control device.

It concerns correlatively a device adapted to implement the updating method according to this second aspect of the invention.

The present invention finally concerns, in a third aspect, a method of processing a document using a processing control device connected to a processing peripheral by a communication network.

It concerns correlatively a device adapted to implement the processing method according to the invention.

It concerns in general terms the field of communication networks, and more particularly the development of wireless networks without however being limited to this type of network.

In communication networks several processing control devices and processing peripherals are connected.

The processing control devices make it possible to initiate the processing of a document by a processing peripheral. These processing control devices typically comprise computers or for example a wireless telephone.

The processing peripherals include both document printing devices, such as a printer or electronic whiteboard associated with a printer and document transmission devices, such as a facsimile machine, a modem and in general terms all types of interfaces for communicating to the outside of the communication network in question.

These processing peripherals can also be document acquisition devices, such as a scanner, or possibly document storage devices.

Conventionally, these peripherals are connected to the network either by being connected via an interface card to a computer itself connected to the network, or by being directly connected to the communication network. In the latter case, the use of the processing peripherals is in fact shared by all the users connected by means of a processing control device to the network.

More and more, these peripherals are being made accessible to a processing control device of a user by a wireless network. It is then no longer necessary to be connected by a cable in order for example to be able to print or transmit a document. These processings if necessary can even be implemented whilst the processing control device or a processing peripheral is in the process of moving within the wireless network or between several wireless communication networks.

However, wireless networks, by their very nature, do not make it possible to ensure a constant transmission rate. Interference often occurs which causes errors during the transmission of data packets and therefore reduces the available bandwidth. As a result, for example, a user who wishes to print a bulky document will sometimes have to wait an excessive length of time before the printing is carried out.

The purpose of the present invention in its first aspect is to resolve the aforementioned drawbacks and to propose a method of updating the configuration characteristics of the processing peripherals accessible from a processing control device according to the bandwidth available.

In accordance with the invention, the method of updating the configuration characteristics of at least one processing peripheral accessible from a processing control device via a communication network, comprises the following steps:
- evaluating the bandwidth available on the communication network;
- choosing a configuration mode of said processing peripheral depending on said available bandwidth; and
- updating, if necessary, the configuration of said processing peripheral from the configuration mode chosen.

In this way an updating method is obtained which makes it possible to automatically change the characteristics of the processing peripherals as perceived by the user in order to make them compatible with the bandwidth available on the communication network.

The configuration of the processing peripherals can thus be changed when the transmission rate varies.

By automatically adapting the configuration of the processing peripherals to the bandwidth available on the network, the documents can be processed in a reasonable time for the user.

According to one advantageous characteristic of the invention, the updating method also comprises a step of displaying said at least one processing peripheral accessible from said processing control device, adapted to display the configuration mode chosen for said processing peripheral displayed.

This display step makes it possible to indicate to the user whether the accessible peripherals are usable in a full mode or in a degraded mode (for example with a lesser processing resolution) according to the configuration chosen as a function of the bandwidth available on the communication network.

Preferably, in order to allocate to the processing control device a default processing peripheral which is compatible in spite of any modification to the configuration of the processing peripherals as a function of the available bandwidth, the updating method also comprises a step of selecting a default processing peripheral amongst the processing peripherals accessible from said processing control device in order to select a processing peripheral having a chosen configuration mode similar to the configuration mode of a default processing peripheral selected previously.

In practice, the choosing step is adapted to choose a configuration mode by means of a configuration table associating a configuration mode with an available bandwidth value.

According to an advantageous version of the invention, the step of evaluating the available bandwidth is implemented periodically in order to regularly detect any changes in bandwidth which may influence and in particular delay the processing of a document.

In practice, at the evaluation step, a mean bandwidth value is calculated from successive evaluations of the instantaneous value of the bandwidth of the communication network.

Preferably, the evaluation step comprises the following sub-steps:
- evaluating the instantaneous bandwidth value;
- comparing said instantaneous value with a mean bandwidth value;
- reiterating the evaluation step and comparison steps if the difference between said instantaneous value and said mean value is greater than a predetermined threshold value; and
- deducing a non-temporary change in the bandwidth when the difference between said instantaneous value and said mean value of bandwidth is greater than the predetermined threshold value for a predetermined number of successive evaluations of the instantaneous bandwidth value.

This succession of steps makes it possible to take a change in bandwidth into account only when this is not temporary. It is thus ensured that the chosen configuration mode is indeed adapted to the bandwidth actually available on the network and does not correspond to an instantaneous reduction in the available bandwidth which would no longer apply during the processing of the document.

Thus, in practice, the steps of choosing a configuration mode and if necessary updating said configuration are reiterated when, at the deduction step, a non-temporary change in bandwidth is deduced.

The updating method according to the invention is particularly well adapted when the processing peripherals are document printing devices, such as a printer or electronic whiteboard, and/or document transmission devices, such as a facsimile machine or a modem, and/or document acquisition devices, such as a scanner.

Correlatively, the present invention also concerns, in its first aspect, a device for updating the configuration characteristics of at least one processing peripheral accessible from a processing control device via a communication network, having:
- means of evaluating the bandwidth available on the communication network;
- means of choosing a configuration mode of said processing peripheral depending on said available bandwidth; and
- means of updating, if necessary, the configuration of said processing peripheral from the configuration mode chosen.

This updating device has characteristics and advantages similar to those described above for the method according to a first aspect of the invention.

In addition, when the user moves within a cabled network, or when he moves between several communication networks, whether they are cabled or not, he must, in order to use a processing peripheral, such as a printer for example, perform numerous operations prior to the printing of the document. He must first of all seek the printers available locally, then download the printer driver onto the mobile processing control device, install this driver, and then possibly modify the configuration of this driver according to the transmission mode available on the communication network.

All these operations are lengthy and not accessible to a conventional user of a communication network.

Likewise, the processing peripherals may be movable within a network or between several communication networks. The operations prior to printing described above must then be reiterated when some processing peripherals have been moved, added to or eliminated from the communication network.

The purpose of the present invention, in a second aspect, is to resolve the aforementioned drawbacks and to propose a method of automatic updating of the processing peripherals accessible from a processing control device.

According to the invention, the method of updating a list of processing peripherals accessible from a processing control device within a communication network connecting said processing peripherals to the processing control device comprises the following steps:
- detecting the movement of said processing control device or processing peripheral within one or between a number of communication networks;
- making an inventory of the processing peripherals in proximity to said processing control device; and
- modifying said list if new processing peripherals are accessible from said processing control device.

The updating method according to a second aspect of the invention thus makes it possible, as soon as the movement of the mobile processing control device or of a mobile processing peripheral is detected, to discover and install the processing peripherals situated close to the processing control device in the communication network.

This system is transparent for the user, who no longer has any need to configure his processing control device in order to process a document when he is situated in a new place, connected to a new communication network.

According to a preferred characteristic of the invention, the updating method also comprises a step of selecting a default processing peripheral in said list of processing peripherals accessible from said processing control device.

This selection step makes it possible to allocate to the processing control device a default processing peripheral notably at each new location of this processing control device so that its operation is similar to a processing control device which is fixed for the user.

In practice, at the selection step, a processing peripheral is chosen with configurability characteristics similar to the configurability characteristics of a default processing peripheral selected previously.

Thus a processing peripheral is found compatible with the one previously chosen for the processing control device so that the processing of a document, for example its printing, can be effected in a very similar fashion whatever the location of this processing control device.

According to a preferred characteristic of the invention, the updating method also comprises a step of displaying the list of processing peripherals accessible from said processing control device.

The user can thus simply display all the peripherals which are accessible at a given location of the processing control device in the communication network, at a given time.

Preferably, at the display step, the processing peripherals inventoried at the inventory step are displayed and the other peripherals in said list of processing peripherals are masked.

This characteristic makes it possible to limit the display to the peripherals situated in the immediate vicinity of the processing control device in the communication network and to temporarily mask the peripherals which are distant from the processing control device, whether because the location of the latter has changed or because processing peripherals have been moved.

These masked processing peripherals are however kept in memory in the list of peripherals so that they can very simply once again be available when the processing control device or processing peripherals are subsequently moved within the network or between several communication networks.

According to one embodiment of the invention, at the detection step, the detection of the movement of said processing control device or processing peripheral is effected when said processing control device or processing peripheral is registered with a new base station in a wireless communication network.

The movement of the processing control device or processing peripheral in a network or between wireless networks is detected very simply, concomitantly with the recording of this processing control device or mobile processing peripheral on the network.

In another embodiment, particularly well adapted to the cabled network, at the detection step, the detection of the movement of said processing control device or processing peripheral is effected by detecting a change of network address of said processing control device or processing peripheral connected in a cabled communication network.

According to a particularly preferred embodiment of the invention, the updating method according to the second aspect of the invention also comprises a method of updating the configuration characteristics of the processing peripherals inventoried as a function of said available bandwidth in accordance with the first aspect of the invention.

In this way an updating method is obtained which makes it possible to automatically change the characteristics of the processing peripherals as perceived by the user in order to make them compatible with the bandwidth available on the communication network.

The configuration of the processing peripherals can thus be changed when the transmission rate varies.

By automatically adapting the configuration of the processing peripherals to the bandwidth available on the network, the documents can be processed in a reasonable time for the user.

The updating method according to the second aspect of the invention is particularly well adapted when the processing peripherals are document printing devices, such as a printer or electronic whiteboard, and/or document transmission devices, such as a facsimile machine or a modem, and/or document acquisition devices, such as a scanner.

Correlatively, the present invention also concerns, in a second aspect, a device for updating a list of processing peripherals accessible from a processing control device within a communication network connecting said processing peripherals to the processing control device, characterised in that it has:
- means of detecting the movement of said processing control device or of a processing peripheral within one or between a number of communication networks;
- means of making an inventory of the processing peripherals in proximity to said processing control device; and
- means of modifying said list if new processing peripherals are accessible from said processing control device.

This updating device has characteristics and advantages similar to those described above for the method according to the second aspect of the invention.

Finally, the purpose of the present invention, in a third aspect, is to propose a method of processing a document which makes it possible to process the document whatever the bandwidth available.

In accordance with the invention, the method of processing a document from a processing control device connected to a processing peripheral by a communication network comprises the following steps:
- evaluating the bandwidth available on the communication network;
- comparing said available bandwidth with a threshold value;
- calculating a transfer time for said document depending on the size of the document and the available bandwidth when said available bandwidth is less then the threshold value;
- comparing the transfer time with a predetermined acceptable transfer time value;
- degrading one or more available parameters of said document as long as said transfer time is greater than the predetermined acceptable transfer time value; and
- processing said document with the processing peripheral.

This processing method thus makes it possible to reduce the size of a document by degrading it when the available bandwidth is not sufficient for obtaining a rapid processing of the document.

According to a practical characteristic of the invention, which makes it possible to evaluate simply the duration of transfer as a function of the bandwidth available, at the step of calculating a transfer period, the document is transformed into a set of digital data to be processed, the number of bits to be processed is calculated and said number of bits calculated is divided by the value of the transmission rate associated with the available bandwidth.

According to an advantageous characteristic of the invention, at the degradation step, said available parameters are chosen notably amongst the number of colour shades or grey levels used in said document, the resolution factor applied to the processing of said document and the type of function to be processed included in the document.

It is thus, for example, possible, in order to print a document with a narrow bandwidth, to automatically eliminate the images or drawings included in the document to be processed.

According to a preferred embodiment of the invention, the processing method according to the invention also comprises a method of updating the configuration characteristics of the processing peripheral according to the first aspect of the invention.

In this way a processing method is obtained which also makes it possible to automatically update the characteristics of the processing peripherals as perceived by the user in order to make them compatible with the bandwidth available on the communication network.

The configuration of the processing peripherals can thus be changed when the transmission rate varies.

Thus, combined with the degradation of the document, the adaptation of the configuration of the processing peripherals to the bandwidth available on the network makes it possible to process the documents in a reasonable time for the user.

The method of processing a document according to the third aspect of the invention is particularly well adapted when the processing peripherals are document printing devices, such as a printer or electronic whiteboard, and/or document transmission devices, such as a facsimile machine or modem, and/or document acquisition devices, such as a scanner.

Correlatively, the present invention also concerns, in a third aspect, a device for processing a document from a processing control device connected to a processing peripheral by a communication network, having:
- means of evaluating the bandwidth available on the communication network;
- means of comparing said available bandwidth with a threshold value;
- means of calculating a transfer time for said document depending on the size of the document and the available bandwidth when said available bandwidth is less than the threshold value;
- means of comparing the transfer time with a predetermined acceptable transfer time value;
- means of degrading one or more available parameters of said document as long as said transfer time is greater than the predetermined acceptable transfer time value; and
- means of processing said document with the processing peripheral.

This device for processing a document has characteristics and advantages similar to those described previously for the method according to the third aspect of the invention.

The invention also concerns a computer or wireless telephone comprising an updating device according to the first or second aspect of the invention and a processing device according to the third aspect of the invention.

The present invention also concerns a communication network comprising means adapted to implement the updating method according to the first or second aspect of the invention or the processing method according to the third aspect of the invention or correlatively comprising an updating device according to the first or second aspect of the invention or a processing device according to the third aspect of the invention.

This communication network consists of a wireless communication network in one embodiment or consists of a cabled communication network.

The present invention also concerns an information storage means, possibly partially or totally removable, which can be read by a computer or microprocessor and stores instructions of a computer program characterised in that it makes it possible to implement the updating method according to a first or second aspect of the invention or the processing method according to a third aspect of the invention.

It finally concerns a computer program, which can be read by a computer, comprising portions of software code adapted to implement the updating method according to a first or second aspect of the invention, or the processing method according to a third aspect of the invention.

The preferential or advantageous characteristics, and the advantages of this computer, this wireless telephone, this network, this information storage means and this computer program being identical to those of the methods which they implement, they are not repeated here.

Other particularities and advantages of the invention will also emerge from the following description.

In the accompanying drawings, given by way of non-limitative examples:
- Figure 1 illustrates communication networks adapted to implement the invention;
- Figure 2 depicts a flow diagram of a method of updating a list of processing peripherals;
- Figure 3 depicts a flow diagram detailing the movement detection step according to a first embodiment of the updating method of Figure 2;
- Figure 4 depicts a flow diagram detailing the movement detection step according to a second embodiment of the updating method of Figure 2;
- Figure 5 depicts a flow diagram of a method of updating the configuration characteristics of processing peripherals;
- Figure 6 depicts a flow diagram detailing the bandwidth evaluation step according to one embodiment of the method of updating of the configuration characteristics of Figure 5;
- Figure 7 depicts a flow diagram of a document processing method;
- Figure 8 is a block diagram illustrating a device adapted to implement the methods of updating a list of processing peripherals, of updating the configuration characteristics of the processing peripherals and of processing a document;
- Figure 9 is a block diagram illustrating a device for updating a list of processing peripherals;
- Figure 10 is a block diagram illustrating a device for updating the configuration characteristics of the processing peripherals;
- Figure 11 illustrates the display means of the updating device of Figure 10;
- Figure 12 is a block diagram illustrating a document processing device;
- Figure 13 is a block diagram illustrating a computer adapted to implement the methods of updating a list of processing peripherals, of updating the configuration characteristics of the processing peripherals and of processing a document; and
- Figure 14 is a block diagram illustrating a device adapted to implement the bandwidth evaluation step of Figure 6.

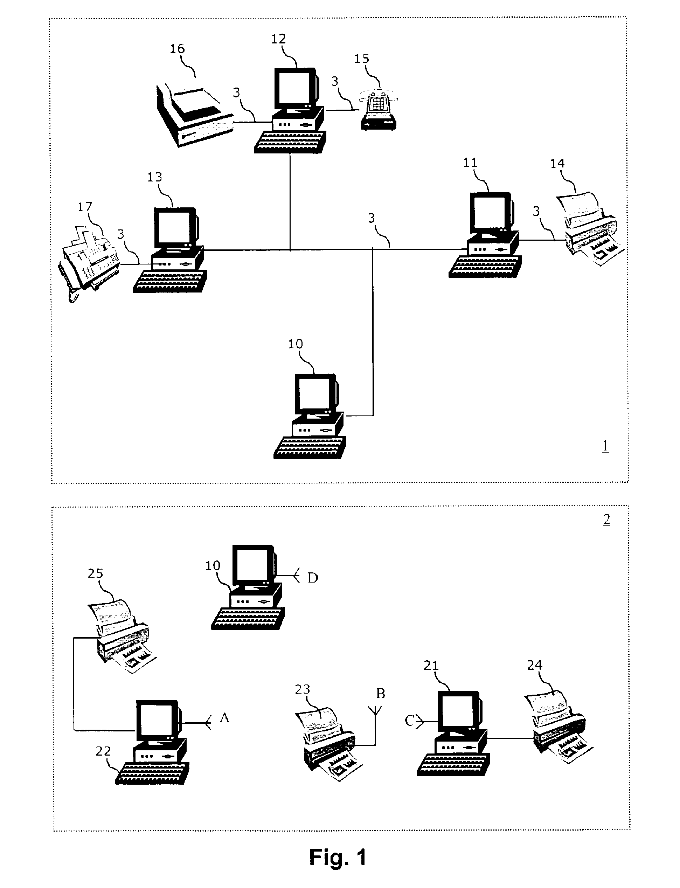

With reference first of all to Figure 1, communication networks 1,2 adapted to implement the invention will be described.

A first network 1 includes several computers 11, 12 and 13 connected together by a cabled network 3 of a particular type, for example by an Ethernet network.

Processing peripherals of different types can be connected to these computers in order to implement different types of processing of a file: for example, a printer 14 is connected to a first computer 11, a modem 14 and a scanner 16 are connected to a second computer 12 and a facsimile machine 17 is connected to a third computer 13.

These processing peripherals 14, 15, 16, 17 are connected to the computers by specific connections of appropriate types normal in cabled computer networks: for example, serial, parallel or SCSI (Small Computer Simple Interface).

Naturally, in this type of cabled communication network, processing peripherals can also be directly connected to the communication network 3, without the interposing of a computer.

A second network 2 is also adapted to implement the invention. It is a case here of a wireless communication network, the computers and peripherals of the network communicating with each other by radio links.

This second network thus includes in this example two computers 21, 22 and a printer 23 each having a communication port A, B, C consisting of an antenna adapted to receive and transmit radio waves.

In addition, the computers 21, 22 are connected as before, by connections which are normal in cabled networks, to printers 24, 25.

Throughout the following description, it will by way of example be considered that the processing peripherals are printers adapted to print a document.

Naturally, the processing peripherals can be document printing devices, such as a printer 14, 23, 24, 25, or an electronic whiteboard, or document transmission devices, such as a facsimile machine 17 or a modem 15, or document acquisition devices, such as a scanner 16.

It will also be considered that the processing control device from which the processing, here the printing of the document, is initiated, is a computer 10.

In this example, this computer 10 is able to move within the wireless network 2 or between the communication networks 1, 2.

However, the updating method described below could also be implemented in a similar fashion in cases where a processing peripheral, such as a printer for example, is able to move in the wireless network 2 or is moved from one communication network to another.

By way of example, the movable computer 10 can be connected to the first network 1 so that a document stored on this movable computer 10 can be processed by one of the processing peripherals 14, 15, 16, 17 of the network 1.

This movable computer can be moved, when the user changes location for example, and be connected to the second network 2 by means of a radio antenna C.

According to its location in this wireless communication network 2, this movable computer 10 will be anchored in the network 2 by one of the communication ports A, B, C.

Possibly the movable computer 10 may be moved within the wireless communication network 2 itself so that its anchoring point is modified.

According to its anchoring point in the communication network 2, the closest processing peripherals to the movable computer 10 will be modified.

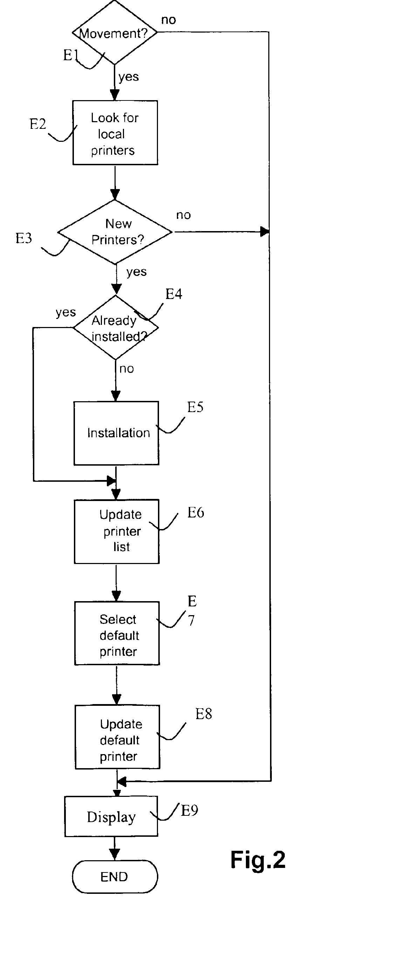

In a first embodiment of the invention, a method as illustrated in Figure 2 makes it possible to update a list of processing peripherals accessible from the movable computer 10, whether the latter moves within the wireless network 2 or whether it moves between different communication networks 1, 2.

This updating method includes first of all a step E1 of detecting the movement of the movable computer 10.

According to the type of communication network to which the movable computer 10 is connected, this movement detection step can be implemented differently.

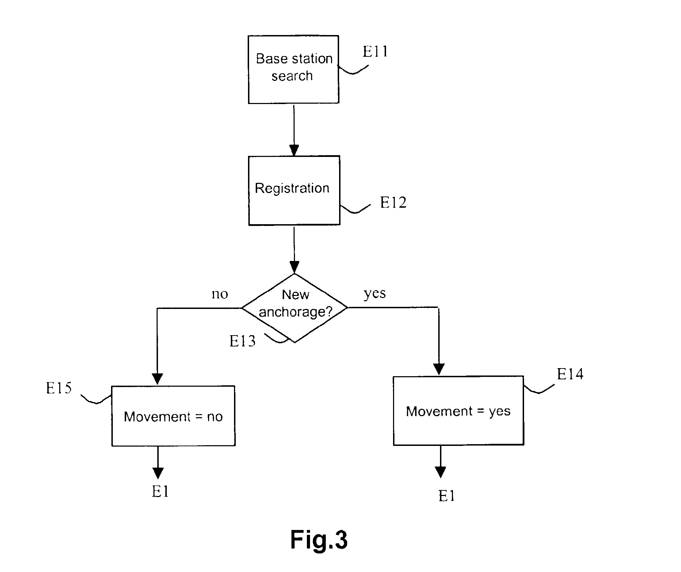

As illustrated in Figure 3, in a wireless communication network 2, when the computer 10 is started up, a step E11 of seeking a base station A, B, C is implemented and then the computer 10 is registered with this base station in a registration step E12.

A test step E13 makes it possible to compare this new anchoring point with the previous anchoring point and to deduce, respectively in detection steps E14 and E15, that there has actually been a movement of the movable computer 10 when the anchoring points are different, and conversely that there has not been any movement of the movable computer 10 when the anchoring points are identical.

It will thus be understood that there is effective detection of a movement of the computer when the latter actually changes anchoring point in the wireless communication network 2 and registers with a new base station. A simple movement of the computer which is not sufficient to change this anchoring point is not a movement within the meaning of this movement detection step E1.

In addition, all the detection steps E11 to E15 can be implemented periodically, for example every fifteen minutes, to check that the movable computer has not been moved in the wireless communication network 2.

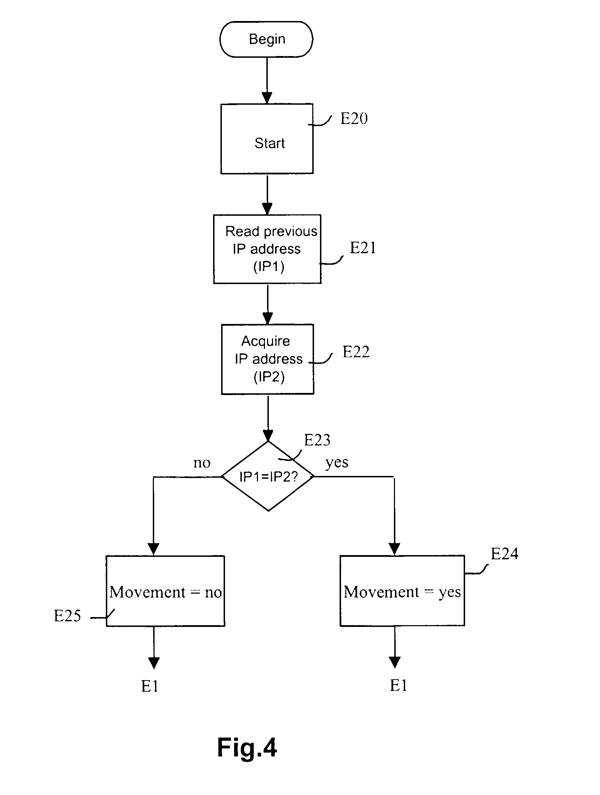

As illustrated in Figure 4, when the communication network is a cabled network, the detection of the movement of the computer from one cabled network to another cabled network can be carried out in practice after a step E20 of starting up the movable computer 10, by detecting a change of IP (Internet Protocol) network address defined in 32 bits according to the Internet protocol. In a step E21 the address of the previous network IP1 is read, the new address IP2 is acquired in a step E22, and a comparison step E23 compares these addresses IP1 and IP2.

According to their identity or not, it is deduced therefrom, respectively in steps E24 and E25, that there has been a movement of the computer 10 or not.

As stated before, this detection of a movement on the networks could also be implemented for the processing peripherals.

Returning to Figure 2, if at the movement detection step E1 no movement of the movable computer 10 has been detected, the updating process terminates.

On the other hand, if the movable computer has just registered on a new base station in a wireless network or has been physically connected to another network, an inventory step E2 makes it possible to seek the local printers situated close to the computer 10.

A single computer request can be sent from the movable computer 10 to the entire communication network so that the local printers respond and identify themselves to the movable computer. The use of such a simultaneous search (broadcast search) is well known in the field of communication networks and does not need to be detailed any further here.

In practice, for example in the wireless communication network 2, the printers close to an anchoring point of the movable computer 10 can be the printers which are on the same sub-network.

A step E3 of extracting new printers is then implemented by comparing the printers inventoried with the list of printers accessible from the computer which is to be updated.

If new printers exist which are not yet listed in the list of printers, a test step E4 checks whether the printer driver is already installed on the movable computer 10.

If this is not already done, an installation step E5 effects this installation.

The remote installation of a printer is well known from the state of the art and is described for example in US patent 5 692 111. In summary, there is obtained from a distant computer to which the printer is connected the list of files making up the printer driver. These files are downloaded onto the movable computer 10 and then the printer is installed locally. In practice, a printer is added for creating a local printer and the files of the driver are associated with this new printer.

Whether or not new printers exist and whether or not these are already installed, the updating method then includes a step proper E6 of updating the list of accessible printers.

In particular, during this updating step E6, the new printers inventoried at the inventory step E3 are added to this list.

It is possible, although this is not necessary, to eliminate from this list the printers which are no longer situated close to the movable computer 10 and which have not been inventoried. However, it is judicious to keep these printers in memory in this list with a view to a subsequent movement of the movable computer 10 at the end of which these printers could once again be situated close to the movable computer 10.

Preferably, the updating method also comprises a step E9 of displaying the list of printers accessible from the movable computer 10.

The updating of the list of printers then results in the display of this list, displaying the printers inventoried at the inventory step E2, by means of a specific icon for each of the printers, and masking the other printers in the list.

Thus the printers which are no longer in the immediate vicinity of the movable computer 10 can be temporarily masked.

In a preferred embodiment, a step E7 of selecting a default printer in the updated list of accessible printers is implemented.

This default printer must of course be situated in the vicinity of the movable computer 10 and form part of the list of printers updated at the previously described step E6.

Preferably, at this selection step E7, a printer is chosen which has configurability characteristics similar to the configurability characteristics of a default printer chosen previously, before the movement of the movable computer 10.

Thus a printer compatible with the one previously used is chosen. Compatible printer means a printer having similar characteristics, for example in terms of colour printing, formats of paper which can be used, the possibility of printing on both sides of the paper, with stapling, etc.

Once this default printer has been selected, an updating step E9 makes it possible to allocate this selected printer as a default printer to the movable computer 10. In practice, the display step E9 can make it possible to display this default printer, identifying it for example by means of an icon different from those used for the other local printers.

This method of updating the list of accessible printers thus makes it possible, in a manner which is completely transparent to the user, to inventory the local printers and to install these on the computer whatever the communication network to which the movable computer 10 is connected.

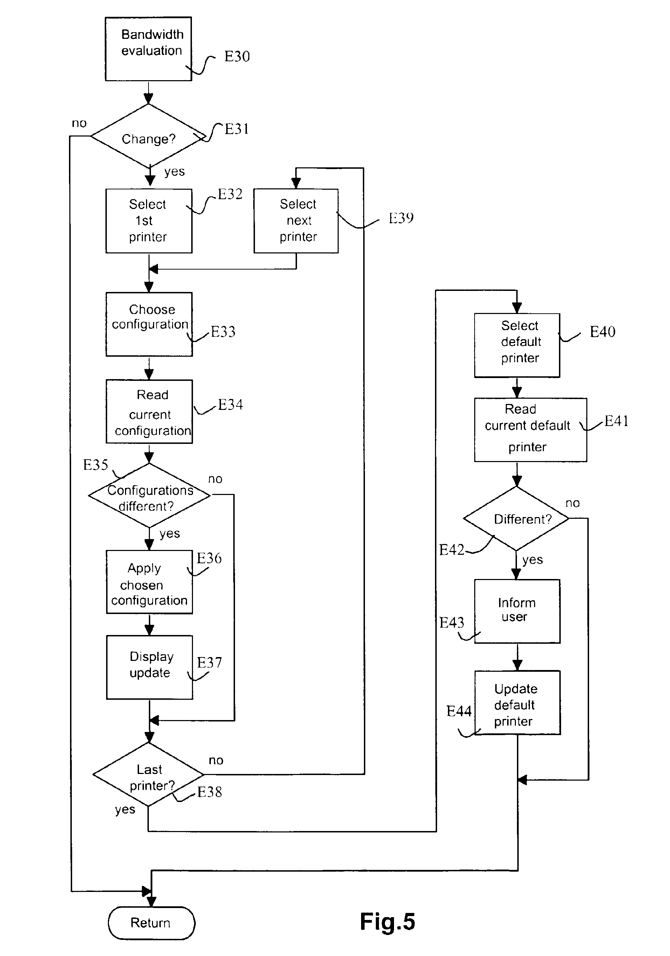

In a second embodiment of the invention, a method as illustrated in Figure 5 makes it possible to update configuration characteristics of at least one printer accessible from the computer 10 according to the bandwidth available on the network to which the computer 10 is connected.

This method of updating the configuration of the printers can be implemented conjointly with the method of updating the list of printers accessible from the movable computer 10, in particular when the latter is connected to or is moving within a wireless communication network 2.

The method of updating the configuration of the accessible printers can also be implemented separately from the method described above, for example in a wireless network in which the available bandwidth is liable to vary over time because of interference on the radio links. In this case, this configuration updating method is completely independent of the fact that the computer 10 has moved or not and applies both to a movable computer 10 and to a non-movable computer.

This configuration updating method comprises first of all a step E30 of evaluating the bandwidth available on the communication network to which the computer is connected.

A choosing step E33 next makes it possible to choose a configuration mode as a function of the bandwidth available on the network.

This choosing step is implemented for all the printers accessible from the computer 10.

When this configuration updating method is implemented conjointly with the method of updating a list of printers accessible from a movable computer 10, this choosing step is implemented for all the printers in the updated list, that is to say for the printers inventoried at the inventory step E2.

In the case of a non-mobile computer, a list of accessible printers is also associated with the computer.

A selection step E32 makes it possible thus to select a first accessible printer.

Following the choosing step E33 a mode of configuring this printer is chosen as a function of the available bandwidth in order to make the functioning of the printer compatible with the available bandwidth.

This configuration mode is preferably chosen by means of a configuration table which associates, for each printer in the network, a configuration mode with a value or a range of available bandwidths.

Typically, the narrower the available bandwidth, the more the configuration mode will be degraded. Thus it is possible to reduce the resolution factor of the printing or the number of colour shades used by the printer in order to accelerate the processing of the document to be printed.

An updating step E34-E37 is then implemented in order if necessary to modify the configuration of this first printer using the configuration mode chosen.

In practice, a reading step E34 makes it possible to read the current configuration of the printer.

In a comparison step E35 it is checked whether or not the current configuration and the configuration chosen are identical.

In the affirmative, steps E33 to E37 are reiterated for the printer in accordance with the list of printers accessible from the computer.

Otherwise an updating step proper E36 applies the chosen configuration mode to the first printer.

Preferably, when a display step E9 as described above is implemented in order to display the list of printers accessible from the computer, it is adapted to display the configuration mode chosen respectively for each printer.

A display updating step E37 thus modifies the display according to the configuration mode applied to each printer.

For example, when each printer is represented by an icon, the latter is for example in solid lines when the printer is in a configuration mode which makes it possible to print satisfactorily (without degradation of the optimum configuration mode, or an excessively long waiting time) as a function of the available bandwidth, and in grey tint when the printer is usable but in a degraded configuration mode.

In a test step E38 it is checked whether the printer is the last printer in the list of printers accessible from the computer and, in the negative, in a selection step E39 a following printer is selected and the choosing step and the configuration mode updating step previously described are reiterated.

Preferably the configuration updating method also comprises a step E40 of selecting a default printer in the list of printers accessible from the computer.

A printer is selected which has a chosen configuration mode similar to the configuration mode of the current default printer, that is to say the default printer selected up till now for the computer.

A reading step E41 makes it possible to know this current default printer and a comparison step E42 checks whether the selected printer and the current printer are different.

In the affirmative, the user is warned of the change of default printer either by a specific message or directly by modifying the display of the list of accessible printers in order to make the new default printer visible by means of a specific icon.

An updating step E44 allocates this new selected printer to the computer as the default printer.

It is judicious, even when the computer is non-movable, for the available bandwidth evaluation step E30 to be implemented periodically, in particular in wireless communication networks in which the bandwidth and associated transmission rate are liable to be modified frequently because of interference, in order to detect changes in available bandwidth.

In practice, at the evaluation step E30, a mean bandwidth value BPm is calculated from successive evaluations of instantaneous value of the bandwidth of the communication network.

This average over time of the available bandwidth makes it possible to have a better estimation of the actual value of the available bandwidth of the network and to differentiate permanent changes in available bandwidth from simple transient or instantaneous changes, which do not require the configuration of the printers to be modified.

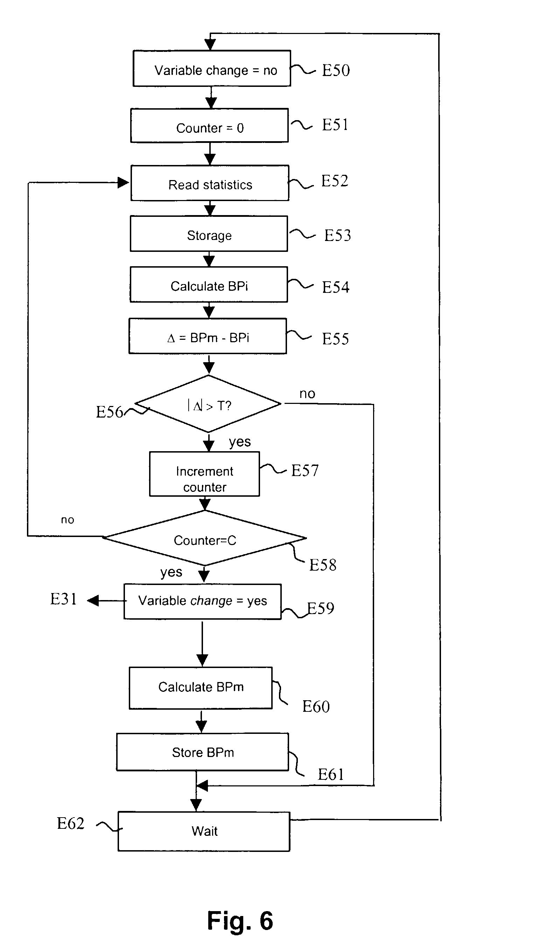

To this end, the evaluation step is detailed in Figure 6.

An initialisation step E50 initialises a variable Change to the response "no".

A step E51 also initialises a counter whose function is explained below. This counter corresponds to the number of measurements which are made before deducing therefrom that the available bandwidth has changed permanently.

The evaluation step then includes a step E52 of evaluating the instantaneous bandwidth value BPi. This evaluation step E52 corresponds to the reading of statistics of an item of radio equipment associated with the computer. This reading can take place by means of an SNMP (Simple Network Management Protocol) request.

By way of example, with reference to Figure 1, in the wireless communication network 2, when the computer 10 is attached to the anchoring point A, the information collected will concern the radio link between this movable computer 10 and the anchoring point A and the segment of the cabled network connecting the printer 25 to the anchoring point A via the computer 22.

By way of example, it may be a case of the number of bytes which have been transmitted during a test on the quality of the link activated by the SNMP request.

Alternatively, this information may also be the estimation, by the radio module associated with the computer 10, of the signal power received.

The result of the reading step E52 is then stored in a storage step E53, and then the instantaneous bandwidth BPi is calculated in a calculation step E54.

This calculation can be carried out by effecting a simple division of the number of bits transmitted by the duration of transmission, or by using a pre-established conversion table which associates an available bandwidth value with a received power.

A comparison step E55 then compares the instantaneous value BPi with the mean bandwidth value BPm and calculates the difference Δ between these two values.

A comparison step E56 is implemented in order to check whether this difference, in absolute value, |Δ| is greater than a predetermined threshold value T.

A threshold T can be fixed corresponding for example to a level of 10%.

If this difference between the instantaneous value BPi and the mean value BPm is less than this threshold value T, it is deduced therefrom that there is no change in bandwidth.

Conversely, if this difference Δ is greater than the threshold value T, the value of the counter is incremented by one unit in a step E47 and this updated value of the counter is compared with a predetermined maximum value C.

If the value of the counter is less than this maximum value C, the evaluation steps E52-E54 and comparison steps E55-E56 are reiterated.

When the value of the counter reaches this value C, that is to say when the difference between the instantaneous value BPi and the mean value BPm of the bandwidth remains greater than the predetermined threshold value T during a predetermined number C of successive evaluations of the instantaneous bandwidth value, it is deduced therefrom, in a step E59, that a non-temporary change in the available bandwidth has occurred on the communication network 2.

The response "yes" is then associated with the variable Change, and all the steps described previously with reference to Figure 5 can be implemented in order to modify the configuration mode of the printers in the communication network.

Thus the steps of choosing a configuration mode and updating this configuration if necessary are reiterated only when a non-temporary change in bandwidth is deduced.

A calculation step E60 calculates the new mean value of the bandwidth BPm, taking account of the instantaneous bandwidth evaluations carried out at steps E52 to E54 and effecting a mean on the time of these instantaneous values BPi.

This mean value BPm is stored in a storage step E61 with a view to a subsequent use, and a waiting step E62 is implemented before reiterating the steps E50 to E62 of evaluating the available bandwidth. It is thus possible to fix a bandwidth calculation period, for example equal to 5 minutes.

This configuration updating method thus makes it possible to adapt, in real time, the configuration of the processing peripherals in a communication network to the bandwidth available on the network.

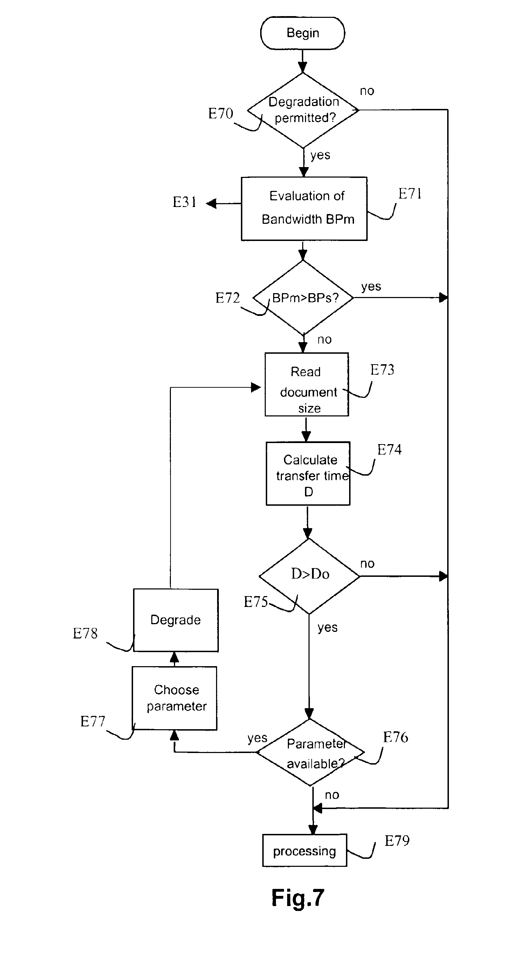

With reference to Figure 7, a third embodiment of the invention can be implemented for processing a document using a computer connected to a printer by a communication network as a function of the bandwidth available on the network.

This document processing method can be implemented conjointly with or separately from the method of updating the configurations of the printers described previously.

In general terms, it makes it possible to degrade the content of the document to be processed in order to adapt to the bandwidth available on the network.

As illustrated in Figure 7, it comprises a first step E70 which verifies whether the degradation of the document is enabled.

In the negative, the process terminates and the document is printed without modification.

Otherwise a step E71 of evaluating the bandwidth available on the communication network is implemented as described above with reference to Figure 6. The mean value of the available bandwidth BPm is deduced therefrom.

A comparison step E72 is then implemented in order to compare the available bandwidth BPm with a threshold value BPs.

This threshold value corresponds to the minimum bandwidth necessary for correct printing (short waiting times, good print quality).

If this available bandwidth BPm is greater than the threshold value BPs, the process ends with the printing of the document.

Otherwise a step E73 of reading the size of the document to be printed and a step E74 of calculating a transfer time D are implemented.

To read the size of the document to be printed, the latter is converted into digital data to be printed. The size of the document can then be expressed as a number of bits to be printed.

In practice, the document, stored in the form of digital data, is converted into a table describing part of a monochromatic component of the document, each cell in the table representing a pixel. More precisely, each cell in the table contains the coordinates of a pixel and information representing the fact that this pixel is "switched on" or not. There are therefore as many tables as there are monochromatic components necessary for printing the document. The reading and counting of these switched on pixels in each table corresponds to the size of the document to be printed.

A document transfer time D is calculated as a function of the size of the document and the available bandwidth.

For example, the transfer time D is calculated by dividing the number of bits to be printed by the transmission rate, expressed in bits per second, associated with the bandwidth available on the communication network.

A comparison step E75 compares the transfer time D with a predetermined acceptable transfer time value Dₒ.

This acceptable value Dₒ may have been fixed in the factory or be determined by learning so as to adapt to the requirements of the user.

It may possibly be dependent on the number of pages in the document to be processed or its content, so that the user can choose a threshold value D₀ which is higher for a long document or for a colour document or one containing images.

If the calculated time D is less than the acceptable time value Dₒ, the processing method terminates directly with the printing of the document.

It should be noted that the total printing time for the document corresponds to the sum of the time for transferring the document over the network and the printing time proper, which may vary from one printer to another.

Otherwise it is checked whether there does indeed exist a parameter available in the document which can be degraded.

These available parameters are chosen in particular from amongst the number of colour shades or grey levels used in the document, the resolution factor applied to the printing of the document and the type of functions to be printed included in the document.

Functions means for example text functions, graphical functions or images.

If there is at least one parameter available, a parameter is chosen in a step E77 and is degraded in a degradation step E78.

For example, the number of colour shades or grey levels used in the document is reduced, the resolution factor is decreased, or certain functions included in the document amongst those which take the longest to print, such as images, and then to a lesser extent the graphical functions, are eliminated.

At the end of this degradation step E78, steps E73 to E75 are reiterated in order to calculate the new transfer time D for the document thus degraded.

The degradation steps E77 and E78 are reiterated as long as the transfer time D remains greater than the predetermined acceptable transfer time value Dₒ and the parameters available for degradation have not been exhausted.

The processing method then terminates with the printing E79 of the document, possibly degraded.

The parameters available for the degradation can be fixed by the user as well as the order in which they are chosen at the choosing step E77 in order to effect the degradation.

This processing method thus makes it possible to adapt the processing of a document to the bandwidth available on the communication network, and in particular to avoid excessively long processing times.

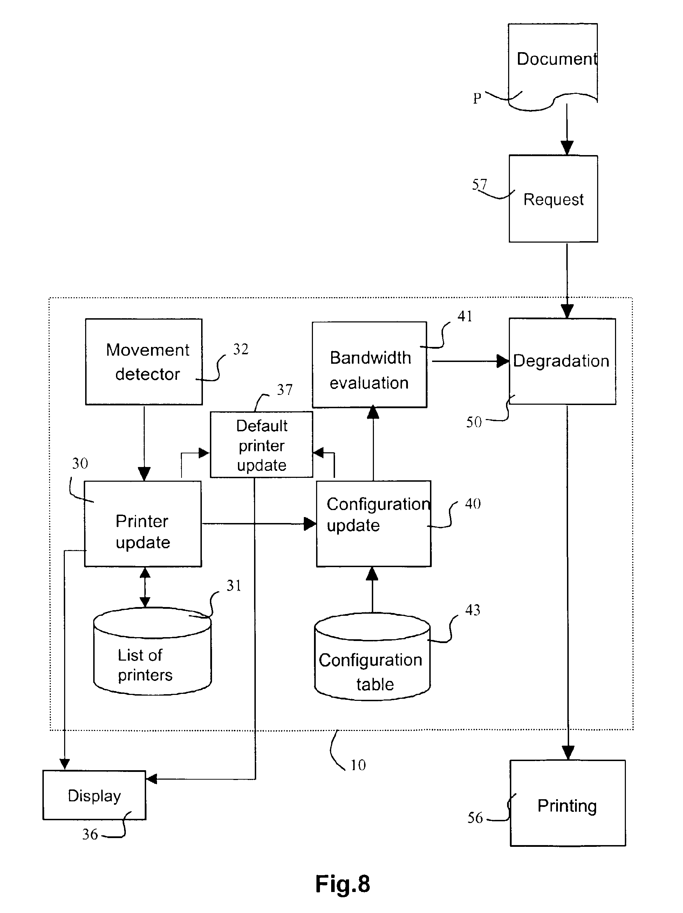

A device adapted to implement all the methods described above will now be described with reference to Figure 8.

In this example embodiment, this device is incorporated in the movable computer 10.

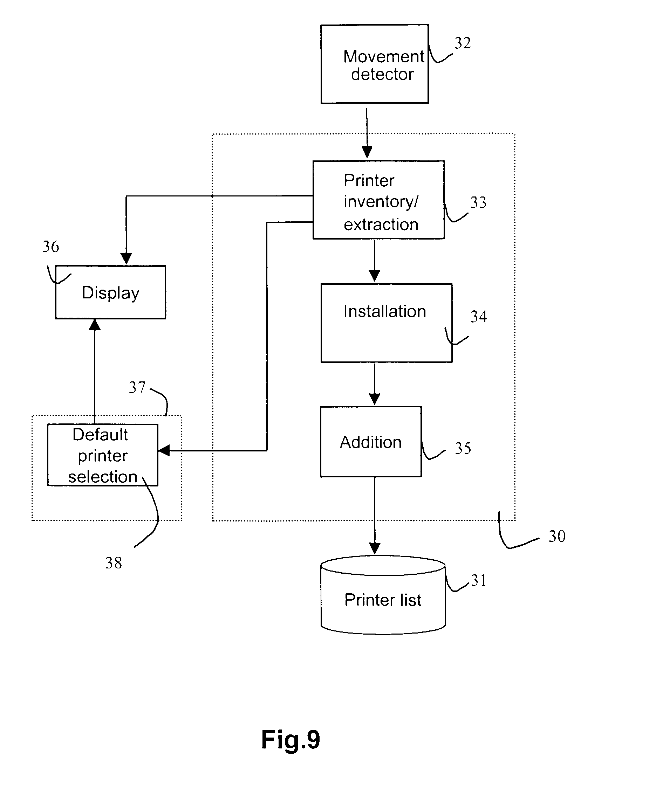

This movable computer 10 comprises first of all a device for updating a list of printers 31 which is illustrated in detail in Figure 9.

This updating device comprises notably means 30 of updating the list of printers 31 which function with means 32 of detecting movement of the computer 10 within one or between several communication networks.

These movement detection means 32 are adapted to detect the movement of the computer 10 when it registers with a new base station in a wireless communication network 2 or a change of IP network address of the computer connected in a cabled communication network 1.

The updating means 30 comprise means 33 of making an inventory of and extracting the new printers situated in the vicinity of the computer 10 by comparing the inventoried printers with the list of accessible printers 31. These inventory and extraction means 33 make it possible to send a global request over the network to all the computers and peripherals connected to the network so that they identify themselves, by their IP network address for example, to the movable computer 10.

The updating means 30 also comprise means 34 of installing the driver for the new printers and means 35 of adding new accessible printers to the list of printers 31.

Display means 36 display the updated list of printers 31.

Thus these display means 36 are adapted to display the local printers and to mask the other printers in the list 31.

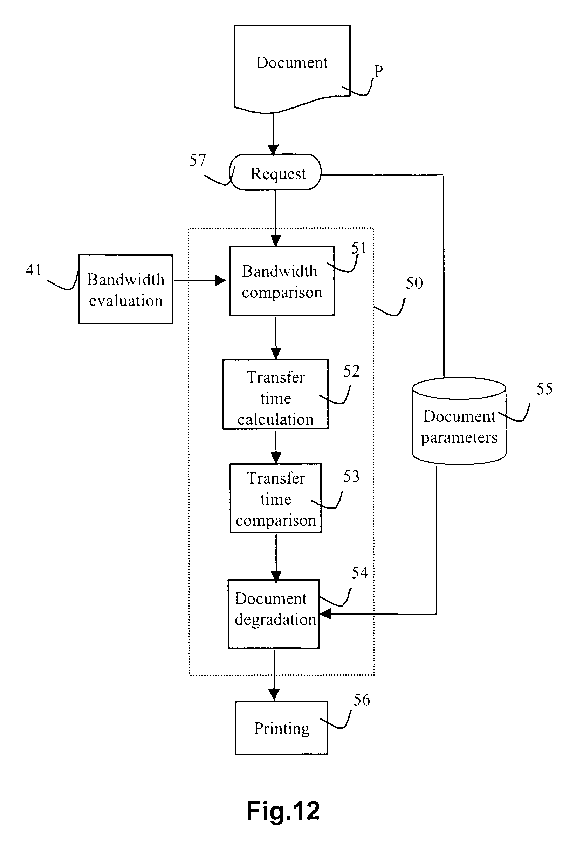

These display means 36 are illustrated in Figure 11. They consist of a conventional graphical interface.

In this example, two printers denoted I1 and I2 are available in the current place where the movable computer 10 is situated.

A directory R, also represented by an icon, contains the list of printers which have been available in the places previously visited by the movable computer 10. This masking in the directory R prevents an excessively large number of printers being visible directly, but despite everything enables the user to use these printers temporarily masked if necessary in other places.

The device for updating the list 31 also preferably comprises means 37 of updating a default printer. These updating means 37 comprise in particular means 38 of selecting a default printer in the list of accessible printers 31 which are adapted as described above to select a printer having configurability characteristics similar to the configurability characteristics of the default printer previously selected.

These means of updating a default printer 37 also cooperate with the display means 36 for displaying on these the selected default printer.

In the example in Figure 11, the printer I1 is the selected default printer, its icon including a supplementary sign, here an accent, which distinguishes it from the other printer icons.

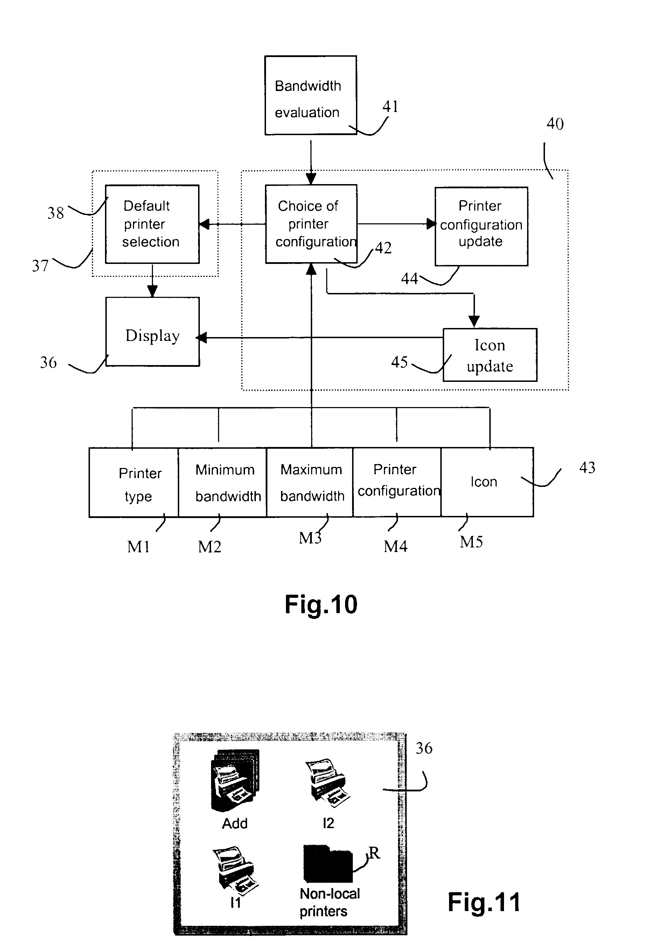

The movable computer 10 comprises secondly a device for updating the configuration characteristics of the printers 31 which is illustrated in detail in Figure 10.

This device for updating the configurations comprises in particular configuration updating means 40 which function with means 41 of evaluating the bandwidth available on the communication network.

The means of evaluating the available bandwidth 41 are adapted to evaluate the available bandwidth periodically and to calculate the mean bandwidth from successive evaluations of the instantaneous value of the bandwidth of the communication network.

These evaluation means function with a radio module which will be described in detail subsequently.

In entirely general terms, these evaluation means 41 are adapted to evaluate the instantaneous bandwidth value BPi, to compare this instantaneous value with a mean bandwidth value BPm, to reiterate these evaluation and comparison steps if the difference between the instantaneous value BPi and said mean value BPm is greater than a predetermined threshold value and to deduce a non-temporary change in the bandwidth when this difference remains greater than the predetermined threshold value during a predetermined number of successive evaluations of the instantaneous bandwidth value.

The configuration updating means 40 comprise means 42 of choosing a configuration mode for each printer as a function of the available bandwidth.

These choosing means 42 preferably function with a prerecorded configuration table 43 which includes in this example five registers M1 to M5 for storing each type of printer, stored in M1, and for each bandwidth range whose lower and upper limits are stored respectively in M2 and M3, a configuration mode whose characteristics are stored in M4. A fifth register M5 makes it possible to store an icon associated with each configuration mode which makes it possible to display the configuration mode applied to the printer in order to inform the user.

From the calculated bandwidth value, the choosing means 42 choose a printer configuration in the configuration table 43 and updating means 44 making it possible to apply this chosen configuration mode to the printer.

Means of updating the icon 45 cooperate with the display means 36 described above in order to display the chosen configuration mode respectively for each accessible printer I1 and I2.

Thus the icon for the first printer I1 is in solid lines, which denotes that this printer I1 can be used satisfactorily with the bandwidth available on the network, whilst the icon for the second printer I2 is tinted grey in order to indicate that this printer can be used only in a degraded mode (with a lower printing resolution for example) because of the bandwidth currently available on the network.

The means of choosing 42 and updating 44 are adapted to reiterate the choice of a configuration mode and the updating if necessary of the configuration each time a non-temporary change in bandwidth is detected.

The configuration updating device also cooperates with the means 37 of selecting a default printer described previously which make it possible to select a printer having a configuration mode similar to the configuration mode of the default printer selected previously.

The movable computer 10 comprises thirdly a document processing device illustrated in detail in Figure 12.

This processing device here makes it possible to print a document P. It comprises degradation means 50 which cooperate with the means of evaluating the available bandwidth 41 described previously.

The degradation means 50 comprise means 51 of comparing the available bandwidth with a threshold value, means 52 of calculating a time for transferring the document P as a function of the size of the document and the available bandwidth when this available bandwidth is less than the threshold value, means 53 of comparing the transfer time with a predetermined acceptable transfer time value and means 54 of degrading one or more parameters available in this document P as long as the transfer time remains greater than the predetermined acceptable transfer time value.

The calculation means 52 are adapted to transform the document P into a set of digital data, to calculate the number of bits to be printed and to divide this number of bits calculated by the value of the transmission rate associated with the available bandwidth.

The parameters available for degrading the document P can be stored and if necessary classified in a table of parameters 55. These parameters can be given by the user, who can determine the order in which they will be chosen by the degradation means 54 in order to degrade the document.

These available parameters can in particular be the number of colour shades or grey levels used in the document, the resolution factor applied to the printing of the document and the type of function to be processed included in the document, such as graphics, drawings or images.

Printing means 56 cooperate with the degradation means 50 in order to print the document, possibly degraded, when a request has been sent by the user and received by request reception means 57.

Naturally, the movable computer 10 could contain only one of the three devices described above or any combination of two of them.

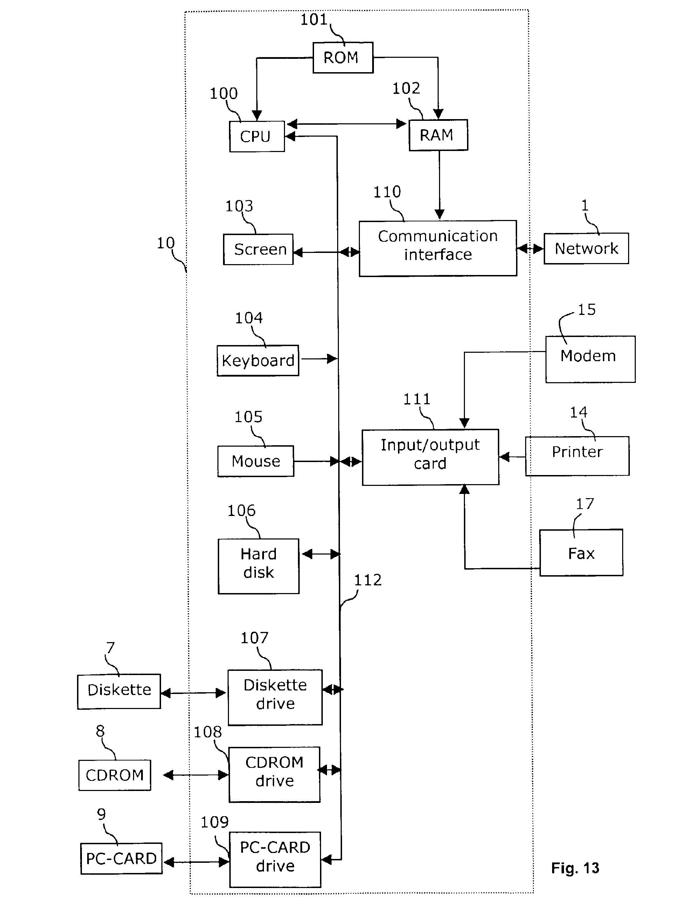

Such a computer 10 incorporating the aforementioned devices in its microprocessor 100 is illustrated in Figure 13.

A read only memory 101 is adapted to store a program for updating a list of processing peripherals accessible from the movable computer 10, in order to update configuration characteristics of the processing peripherals accessible and to process a document as a function of the bandwidth available.

A random access memory 102 comprises registers adapted to store variables modified during the running of said program.

This microprocessor 100 is integrated into the computer 10, which can be connected to different processing peripherals, for example a modem 15, a printer 14 or a facsimile machine 17, directly or by means of an input-output card 111 or by means of the communication network 1.

This computer 10 has a communication interface 110 which can be connected to the communication network 1 in order to receive or send data processing requests and transfer or receive documents.

The computer 10 also has document storage means, such as a hard disk 106, or is adapted to cooperate, by means of a disk drive 107, a compact disc drive 108 or a computer card reader 109, with removable document storage means, respectively diskettes 7, compact discs (CDs) 8 or computer cards 9 (PC cards).

These fixed or removable storage means can also include the code of the method according to the invention which, once read by the microprocessor 100, will be stored in the hard disk 106.

By way of variant, the program enabling the device to implement the invention can be stored in the read only memory 101 (ROM).

As a second variant, the program can be received in order to be stored as described above by means of the communication network 1.

The computer 50 also has a screen 103 making it possible, for example, to serve as an interface with an operator by means of the keyboard 104 or the mouse 105 or any other means. This screen 103 constitutes the display means 37 which make it possible to display the list of printers accessible at a given place, the default printer and their respective configuration mode as a function of the bandwidth available at a given moment.

The central unit 100 (CPU) will execute the instructions relating to the implementation of the invention. On powering up, the programs and methods relating to the invention are stored in a non-volatile memory, for example the read only memory 101, are transferred into the random access memory 102 (RAM), which will then contain the executable code of the invention as well as the variables necessary for implementing the invention.

Thus the read only memory 101 will store in particular the calculation period for the available bandwidth, the threshold value T used for detecting the changes in available bandwidth, the maximum threshold value C for the counter of evaluations of the instantaneous bandwidth, the minimum bandwidth value BPs used for degrading a document, the acceptable processing time D₀, the list of accessible printers 30, the configuration table 43 and the table 55 of parameters available for effecting the degradation of a document.

The random access memory 102 comprises registers for storing in particular the list of accessible printers 30 updated as a function of the location of the computer 10, the default printer, the calculated mean bandwidth value, the change variable, the value of the counter of instantaneous bandwidth evaluations, the size of the document to be processed and the calculated processing time D.

A communication bus 112 affords communication between the different sub-elements of the computer 10 or connected to it. The representation of the bus 112 is not limitative and in particular the microprocessor 100 is able to communicate instructions to any sub-element directly or by means of another sub-element.

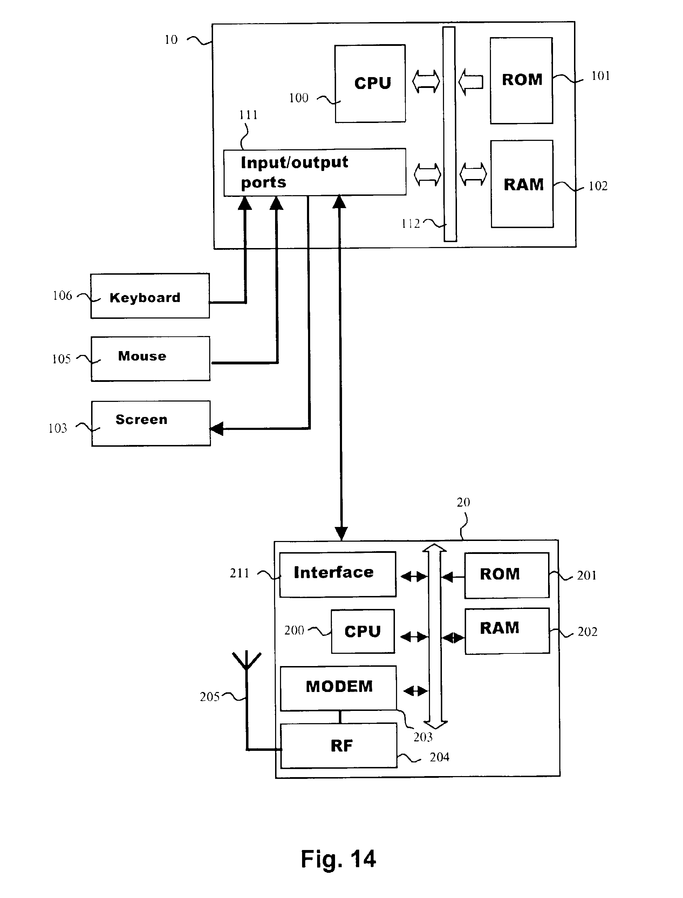

Figure 14 illustrates a movable computer 10 as described above associated with a radio module 20 in order to detect changes in available bandwidth.

This radio module 20 is associated with the computer 10 by means of the input-output port 111. It makes it possible to send and receive data in the form of electromagnetic waves.

The radio module 20 is composed of a main data processing circuit 200, associated with a read only memory 201, a random access memory 202 and a connection interface 211. The read only memory 201 conventionally contains operating programs for the main processing circuit (CPU) 200, whilst the random access memory 202 temporarily stores the data received from another similar radio module connected to the wireless communication network 2 as well as the data processed by the main processing circuit 200. In particular, a program referred to as the SNMP (Simple Network Management Protocol) agent, responsible for collecting information on the quality of the radio link and to respond to the SNMP requests, is run continuously.

The random access memory 202 thus stores the statistics read on the network in order to measure the instantaneous bandwidth, which can consist of a number of bytes transmitted during a test or the power of the signal received by the radio module.

The main data processing circuit 200 is connected to a modulation and demodulation circuit (Modem) 203, converting the binary information streams into analogue signals.

The modem 203 is connected to an RF stage 204 which amplifies the signals and transposes them in frequency. Finally the RF stage 204 uses an antenna 205 for receiving and transmitting the radio waves.

The interface 211 is an Ethernet interface for exchanging data and control messages. In particular, the computer 10 can request of the radio module 20 the instantaneous value of the quality of the radio channel using the SNMP protocol. This instantaneous value is processed so as to obtain the value of the instantaneous bandwidth, which is compared with the value of the mean bandwidth stored in the random access memory 102 of the computer 10.

This movable computer 10, equipped with a radio module 20, thus makes it possible to detect changes in bandwidth available on the wireless communication network 2 in order to update the configuration of the printers and/or to degrade the content of a document as a function of this available bandwidth.

The present invention thus makes it possible to optimise the processing, and in particular the printing of a document using a computer connected to a communication network.

It applies, but non-limitatively, particularly well to a movable computer, connected to a wireless communication network.

## Claims

1. Method of updating the configuration characteristics of at least one processing peripheral accessible from a processing control device via a communication network, characterised in that it comprises the following steps:
- evaluating (E30) the bandwidth available on the communication network;
- choosing (E33) a configuration mode of said processing peripheral depending on said available bandwidth; and
- updating (E36), if necessary, the configuration of said processing peripheral from the configuration mode chosen.

2. Updating method according to Claim 1, characterised in that it furthermore comprises a step of displaying (E37) said at least one processing peripheral accessible from said processing control device adapted to make visible the configuration mode chosen for the said displayed processing peripheral.

3. Updating method according to one of Claims 1 or 2, characterised in that it furthermore comprises a step of selecting (E40) a default processing peripheral from among the processing peripherals accessible from said processing control device in order to select a processing peripheral having a chosen configuration mode similar to the configuration mode of a default processing peripheral selected previously.

4. Updating method according to one of Claims 1 to 3, characterised in that the choosing step (E33) is adapted to choose a configuration mode by means of a configuration table (43) associating a configuration mode with an available bandwidth value.

5. Updating method according to one of Claims 1 to 4, characterised in that the said available bandwidth evaluation step (E30) is implemented periodically.

6. Updating method according to one of Claims 1 to 5, characterised in that, at the evaluation step (E30), a mean bandwidth value (BPm) is calculated from successive evaluations of the instantaneous bandwidth value (BPi) of the communication network.

7. Updating method according to one of Claims 1 to 6, characterised in that the evaluation step comprises the following sub-steps:
- evaluating (E54) the instantaneous bandwidth value (BPi);
- comparing (E55, E56) said instantaneous value (BPi) with a mean bandwidth value (BPm);
- reiterating the evaluation step (E54) and comparison steps (E55, E56) if the difference (|Δ|) between said instantaneous value and said mean value is greater than a predetermined threshold value (T); and
- deducing (E59) a non-temporary change in the bandwidth when the difference (|Δ|) between said instantaneous value and said mean value of bandwidth is greater than the predetermined threshold value (T) for a predetermined number (C) of successive evaluations of the instantaneous bandwidth value (BPi).

8. Updating method according to Claim 7, characterised in that the steps of choosing (E33) a configuration mode and of updating (E36), if necessary, said configuration are reiterated when, at the deduction step (E59), a non-temporary change in bandwidth is deduced.

9. Updating method according to one of Claims 1 to 8, characterised in that said processing peripherals are document printing devices, such as a printer (14, 23, 24, 25) or an electronic whiteboard, and/or document transmission devices, such as a facsimile machine (17) or a modem (15), and/or document acquisition devices, such as a scanner (16).

10. Method of updating a list (31) of processing peripherals accessible from a processing control device (10) within a communication network (1, 2) connecting said processing peripherals to the processing control device, characterised in that it comprises the following steps:
- detecting the movement (E1) of said processing control device or processing peripheral within one or between a number of communication networks;
- making an inventory (E2) of the processing peripherals in proximity to said processing control device; and
- modifying (E6) said list if new processing peripherals are accessible from said processing control device.

11. Updating method according to Claim 10, characterised in that it furthermore comprises a step of selecting (E7) a default processing peripheral from said list (31) of processing peripherals accessible from said processing control device.

12. Updating method according to Claim 11, characterised in that, at the selection step (E7), a processing peripheral is chosen having configurability characteristics similar to the configurability characteristics of a default processing peripheral selected previously.

13. Updating method according to one of Claims 10 to 12, characterised in that it furthermore comprises a step of displaying (E9) the list of processing peripherals accessible from said processing control device.

14. Updating method according to Claim 13, characterised in that, at the display step (E9), the processing peripherals inventoried at the inventory-making step are displayed and the other peripherals in said list of processing peripherals are masked.

15. Updating method according to one of Claims 10 to 14, characterised in that, at the detection step (E1), detection of the movement of said processing control device or the processing peripheral is achieved when said processing control device (10) or the processing peripheral is registered with a new base station (A, B, C) in a wireless communication network (2).

16. Updating method according to one of Claims 10 to 14, characterised in that, at the detection step (E1), detection of the movement of said processing control device or of the processing peripheral is achieved by detecting a change of network address (IP) of said processing control device or of the processing peripheral connected in a cabled communication network (1).

17. Updating method according to one of Claims 10 to 16, characterised in that it also comprises a method of updating, in accordance with one of Claims 1 to 9, the configuration characteristics of the processing peripherals inventoried.

18. Updating method according to one of Claims 10 to 17, characterised in that said processing peripherals are document printing devices, such as a printer (14, 23, 24, 25) or an electronic whiteboard, and/or document transmission devices, such as a facsimile machine (17) or a modem (15), and/or document acquisition devices, such as a scanner (16).

19. Method of processing a document from a processing control device connected to a processing peripheral by a communication network, characterised in that it comprises the following steps:
- evaluating (E71) the bandwidth available (BPm) on the communication network;
- comparing (E72) said available bandwidth (BPm) with a threshold value (BPs);
- calculating (E74) a transfer time (D) for said document (P) depending on the size of the document and the available bandwidth when said available bandwidth is less then the threshold value;
- comparing (E75) the transfer time (D) with a predetermined acceptable transfer time value (D₀);
- degrading (E78) one or more available parameters of said document as long as said transfer time (D) is greater than the predetermined acceptable transfer time value (D₀); and
- processing (E79) said document with the processing peripheral.

20. Processing method according to Claim 19, characterised in that, at the transfer time calculation step (E74), the document is converted into a set of digital data to be processed, the number of bits to be processed is calculated and the said calculated number of bits is divided by the value of the transmission rate associated with the available bandwidth.

21. Processing method according to one of Claims 19 or 20, characterised in that, at the degradation step (E78), said available parameters are chosen notably from among the number of shades of colour or levels of grey used in the said document, the resolution factor applied to the processing of the said document and the type of functions to be processed included in the document.

22. Processing method according to one of Claims 19 to 21, characterised in that it also comprises a method of updating, according to one of Claims 1 to 9, the configuration characteristics of said processing peripheral.

23. Processing method according to one of Claims 19 to 22, characterised in that said processing peripherals are document printing devices, such as a printer (14, 23, 24, 25) or an electronic whiteboard, and/or document transmission devices, such as a facsimile machine (17) or a modem (15), and/or document acquisition devices, such as a scanner (16).

24. Device for updating the configuration characteristics of at least one processing peripheral accessible from a processing control device via a communication network, characterised in that it has:
- means of evaluating (41) the bandwidth available on the communication network;
- means of choosing (42) a configuration mode of said processing peripheral depending on said available bandwidth; and
- means of updating (44), if necessary, the configuration of said processing peripheral from the configuration mode chosen.

25. Updating device according to Claim 24, characterised in that it furthermore has means of displaying (36) said at least one processing peripheral accessible from said processing control device adapted to display the configuration mode chosen for said displayed processing peripheral.

26. Updating device according to one of Claims 24 or 25, characterised in that it furthermore has means of selecting (38) a default processing peripheral from among the processing peripherals accessible from said processing control device adapted to select a processing peripheral having a chosen configuration mode similar to the configuration mode of a default processing peripheral selected previously.

27. Updating device according to one of Claims 24 to 26, characterised in that the choosing means (42) are adapted to choose a configuration mode by means of a configuration table (43) associating a configuration mode with an available bandwidth value.

28. Updating device according to one of Claims 24 to 27, characterised in that said available bandwidth evaluation means (41) are adapted to evaluate the available bandwidth periodically.

29. Updating device according to one of Claims 24 to 28, characterised in that the evaluation means (41) are adapted to calculate a mean bandwidth value (BPm) from successive evaluations of the instantaneous bandwidth value (BPi) of the communication network.

30. Updating device according to one of Claims 24 to 29, characterised in that the evaluation means (41) are adapted to evaluate the instantaneous bandwidth value (BPi), to compare said instantaneous value with a mean bandwidth value (BPm), to reiterate evaluation and comparison steps if the difference between said instantaneous value and said mean value is greater than a predetermined threshold value (T) and to deduce a non-temporary change in the bandwidth when the difference between said instantaneous value and said mean value of bandwidth is greater than the predetermined threshold value for a predetermined number (C) of successive evaluations of the instantaneous bandwidth value.

31. Updating device according to Claim 30, characterised in that the choosing means (42) and the updating means (44) are adapted to reiterate choosing a configuration mode and updating, if necessary, said configuration when a non-temporary change in bandwidth is deduced.

32. Updating device according to one of Claims 24 to 31, characterised in that said processing peripherals are document printing devices, such as a printer (14, 23, 34, 25) or an electronic whiteboard, and/or document transmission devices, such as a facsimile machine (17) or a modem (15), and/or document acquisition devices, such as a scanner (16).

33. Updating device according to one of Claims 24 to 32, characterised in that it is incorporated into a microprocessor (100, 200), a read-only memory (101, 201) being adapted to store a program for updating the configuration characteristics of at least one processing peripheral accessible from a computer, and a random access memory (102, 202) comprising registers adapted to store variables modified during execution of said program.

34. Device for updating a list of processing peripherals (31) accessible from a processing control device (10) within a communication network connecting said processing peripherals to the processing control device, characterised in that it has:
- means of detecting (32) the movement of said processing control device or of a processing peripheral within one or between a number of communication networks;
- means of making an inventory (33) of the processing peripherals in proximity to said processing control device; and
- means of modifying (35) said list if new processing peripherals are accessible from said processing control device.

35. Updating device according to Claim 34, characterised in that it furthermore has means of selecting (38) a default processing peripheral from said list of processing peripherals accessible from said processing control device.

36. Updating device according to Claim 35, characterised in that the selection means (38) are adapted to select a processing peripheral having configurability characteristics similar to the configurability characteristics of a default processing peripheral selected previously.

37. Updating device according to one of Claims 34 to 36, characterised in that it furthermore has means of displaying (36) the list of processing peripherals accessible from said processing control device.

38. Updating device according to Claim 37, characterised in that the display means (36) are adapted to display the processing peripherals inventoried by the inventory-making means and to mask the other peripherals in the said list of processing peripherals.

39. Updating device according to one of Claims 34 to 38, characterised in that the detection means (32) are adapted to detect the movement of said processing control device or of the processing peripheral when said processing control device or processing peripheral is registered with a new base station (A, B, C) in a wireless communication network (2).

40. Updating device according to one of Claims 34 to 38, characterised in that the detection means (32) are adapted to detect the movement of the said processing control device or processing peripheral by detecting a change of network address (IP) of said processing control device or processing peripheral connected in a cabled communication network (1).

41. Updating device according to one of Claims 34 to 40, characterised in that it also includes a device for updating, in accordance with one of Claims 24 to 33, the configuration characteristics of said processing peripherals inventoried.

42. Updating device according to one of Claims 34 to 41, characterised in that said processing peripherals are document printing devices, such as a printer (14, 23, 24, 25) or an electronic whiteboard, and/or document transmission devices, such as a facsimile machine (17) or a modem (15), and/or document acquisition devices, such as a scanner (16).

43. Updating device according to one of Claims 34 to 42, characterised in that it is incorporated in a microprocessor (100, 200), a read only memory (101, 201) being adapted to store a program for updating a list of processing peripherals accessible from a processing control device, and a random access memory (102, 202) comprising registers adapted to store variables modified during the running of said program.

44. Device for processing a document from a processing control device connected to a processing peripheral by a communication network, characterised in that it has:
- means of evaluating (41) the bandwidth available (BPm) on the communication network;
- means of comparing (51) said available bandwidth (BPm) with a threshold value (BPs);
- means of calculating (52) a transfer time (D) for said document depending on the size of the document and the available bandwidth when said available bandwidth is less than the threshold value (BPs);
- means of comparing (53) the transfer time (D) with a predetermined acceptable transfer time value (D₀);
- means of degrading (54) one or more available parameters of said document as long as said transfer time (D) is greater than the predetermined acceptable transfer time value (D₀); and
- means of processing (56) said document with the processing peripheral.

45. Processing device according to Claim 44, characterised in that the means of calculating (52) a transfer time (D) are adapted to convert the document into a set of digital data to be processed, to calculate the number of bits to be processed and to divide said calculated number of bits by the value of the transmission rate associated with the available bandwidth.

46. Processing device according to either of Claims 44 or 45, characterised in that the degradation means (54) are adapted to choose said available parameters notably from among the number of shades of colour or levels of grey used in the said document, the resolution factor applied to the processing of said document and the type of functions to be processed included in the document.

47. Processing device according to one of Claims 44 to 46, characterised in that it also includes a device for updating, in accordance with one of Claims 24 to 33, the configuration characteristics of said processing peripheral.

48. Processing device according to one of Claims 44 to 47, characterised in that said processing peripherals are document printing devices, such as a printer (14, 23, 24, 25) or an electronic whiteboard, and/or document transmission devices, such as a facsimile machine (17) or a modem (15), and/or document acquisition devices, such as a scanner (16).

49. Processing device according to one of Claims 44 to 48, characterised in that it is incorporated into a microprocessor (100, 200), a read-only memory (101, 201) being adapted to store a program for processing a document with a processing peripheral accessible from a computer, and a random access memory (102, 202) comprising registers adapted to store variables modified during execution of said program.

50. Computer, characterised in that it comprises an updating device according to one of Claims 24 to 33.

51. Cordless telephone, characterised in that it comprises an updating device according to one of Claims 24 to 33.

52. Communication network, characterised in that it comprises means adapted to implement the updating method according to one of Claims 1 to 9.

53. Communication network, characterised in that it comprises an updating device according to one of Claims 24 to 33.

54. Computer, characterised in that it comprises an updating device according to one of Claims 34 to 43.

55. Cordless telephone, characterised in that it comprises an updating device according to one of Claims 34 to 43.

56. Communication network, characterised in that it comprises means adapted to implement the updating method according to one of Claims 10 to 18.

57. Communication network, characterised in that it comprises an updating device according to one of Claims 34 to 43.

58. Computer, characterised in that it comprises a processing device according to one of Claims 44 to 49.

59. Cordless telephone, characterised in that it comprises a processing device according to one of Claims 44 to 49.

60. Communication network, characterised in that it comprises means adapted to implement the processing method according to one of Claims 19 to 23.

61. Communication network, characterised in that it comprises a processing device according to one of Claims 44 to 49.

62. Communication network according to one of Claims 52, 53, 56, 57, 60 or 61, characterised in that it is composed of a wireless communication network (2).

63. Communication network according to one of Claims 52, 53, 56, 57, 60 or 61, characterised in that it is composed of a cabled communication network (1).

64. Information storage means which can be read by a microprocessor and stores instructions of a computer program, characterised in that it is adapted to implement the updating method according to one of Claims 1 to 9.

65. Information storage means which can be read by a microprocessor and stores instructions of a computer program, characterised in that it is adapted to implement the updating method according to one of Claims 10 to 18.

66. Information storage means which can be read by a microprocessor and stores instructions of a computer program, characterised in that it is adapted to implement the processing method according to one of Claims 19 to 23.

67. Computer program which can be read by a computer, characterised in that it comprises portions of software code adapted to implement the updating method according to one of Claims 1 to 9.

68. Computer program which can be read by a computer, characterised in that it comprises portions of software code adapted to implement the updating method according to one of Claims 10 to 18.

69. Computer program which can be read by a computer, characterised in that it comprises portions of software code adapted to implement the processing method according to one of Claims 19 to 23.
